# EUROPEAN PATENT APPLICATION

(11) **EP 2 664 771 A1**
(43) Date of publication of application: **20.11.2013**
(21) Application number: 12168131.6
(22) Date of filing: 15.05.2012
(51) Int. Cl.: F02D 19/06, F02D 19/08, F02M 37/00

(54) **Multi-fuel operation of an internal combustion engine**

(71) Applicant: Caterpillar Motoren GmbH & Co. KG, 24159 Kiel (DE)
(72) Inventor: Aeffner, Kurt, 24161 Altenholz (DE)
(74) Representative: Kramer - Barske - Schmidtchen

(57) **Abstract**

A fuel change-over module (10) for a combustion engine (12) may be installed in a fuel supply system of the combustion engine (12). The fuel change-over module (10) may be configured to alternatively supply heavy fuel from a heavy fuel tank (102) or light fuel from a light fuel tank (104) to the combustion engine (10) via a fuel circuit (72) formed between the fuel supply module (10) and the combustion engine (12). The heavy fuel and the light fuel may have different temperatures. The fuel change-over module may comprise a fuel mixing tank (40). The volume of the fuel mixing tank (40) may be such that the total volume of fuel circulating in the fuel circuit (72) results in a desired temperature change rate and a desired change-over time when changing the type of fuel supplied to the combustion engine (12) by the fuel change-over module (10).

## Description

### Technical Field

The present disclosure generally relates to a multi-fuel operation of an internal combustion engine and, more particularly, to a multi-fuel operation of at least one internal combustion engine on a ship.

### Background

In marine vessels, specifically large ships such as ferries, cruise ships or cargo ships, it may be necessary to change over between operating one or more combustion engines of the ship with, for example, heavy fuel oil (HFO) and marine diesel oil (MDO) due to environmental regulations. For example, while the ship may run on HFO at sea, it may be necessary to switch to running on MDO near harbors or the like. Furthermore, it may be necessary to purge the one or more combustion engines with MDO before shutting down the same, for example, to perform maintenance.

WO 2011/088830 Al discloses a dual fuel supply system for supplying a heavy fuel and a light fuel to a combustion engine. US 4,300,517 discloses a fuel supply device comprising separate light and heavy fuel loops, which are alternatively connectable to a combustion engine.

The present disclosure is directed, at least in part, to improving or overcoming one or more aspects of prior systems.

### Summary of the Disclosure

According to one aspect of the present disclosure, a fuel change-over module for a combustion engine may comprise a light fuel input for receiving light fuel from a light fuel supply module and a heavy fuel input for receiving heavy fuel from a heavy fuel supply module. The fuel change-over module may further comprise a fuel mixing tank for receiving the fuel received at the light fuel input and the heavy fuel input. A fuel change-over valve may be fluidly connected to the light fuel input, the heavy fuel input, and the fuel mixing tank and may be configured to selectively supply fuel received at the light fuel input or fuel received at the heavy fuel input to the fuel mixing tank. The fuel change-over module may further comprise an engine fuel output for supplying fuel from the fuel mixing tank to the combustion engine, and an engine fuel input for receiving unspent fuel from the combustion engine. The unspent fuel may be supplied to the fuel mixing tank.

According to another aspect of the present disclosure, a combustion engine system for a ship may comprise at least one combustion engine, at least one fuel change-over module fluidly connected to the at least one combustion engine, a heavy fuel supply module configured to supply heavy fuel from a heavy fuel tank to the at least one fuel change-over module, and a light fuel supply module configured to supply light fuel from a light fuel tank to the at least one fuel change-over module. The fuel change-over module may comprise a light fuel input for receiving light fuel from the light fuel supply module and a heavy fuel input for receiving heavy fuel from the heavy fuel supply module. The fuel change-over module may further comprise a fuel mixing tank for receiving the fuel received at the light fuel input and the heavy fuel input. A fuel change-over valve may be fluidly connected to the light fuel input, the heavy fuel input, and the fuel mixing tank and may be configured to selectively supply fuel received at the light fuel input or fuel received at the heavy fuel input to the fuel mixing tank. The fuel change-over module may further comprise an engine fuel output for supplying fuel from the fuel mixing tank to the combustion engine, and an engine fuel input for receiving unspent fuel from the combustion engine. The unspent fuel may be supplied to the fuel mixing tank.

According to yet another aspect of the present disclosure, a method of retrofitting a fuel change-over module to a combustion engine system comprising at least one combustion engine and a fuel supply module configured to supply heavy fuel and/or light fuel from a heavy fuel tank and a light fuel tank, respectively, to the at least one combustion engine may comprise the step of installing a fuel change-over module between the fuel supply module and the at least one combustion engine to reduce the effective volume of fuel in the combustion engine system that has to be replaced during changing over between the heavy fuel and the light fuel. The fuel change-over module may comprise a light fuel input for receiving light fuel from a light fuel supply module and a heavy fuel input for receiving heavy fuel from the heavy fuel supply module. The fuel change-over module may further comprise a fuel mixing tank for receiving the fuel received at the light fuel input and the heavy fuel input. A fuel change-over valve may be fluidly connected to the light fuel input, the heavy fuel input, and the fuel mixing tank and may be configured to selectively supply fuel received at the light fuel input or fuel received at the heavy fuel input to the fuel mixing tank. The fuel change-over module may further comprise an engine fuel output for supplying fuel from the fuel mixing tank to the combustion engine, and an engine fuel input for receiving unspent fuel from the combustion engine. The unspent fuel may be supplied to the fuel mixing tank.

According to yet another aspect of the present disclosure, a method of operating a combustion engine may comprise circulating, when the combustion engine is operating on a heavy fuel, the heavy fuel in a first fuel circuit including a fuel mixing tank and the combustion engine, and circulating the heavy fuel in a second fuel circuit including the fuel mixing tank and a heavy fuel mixing tank, thereby replenishing the heavy fuel consumed by the combustion engine via the fuel mixing tank.

According to another aspect of the present disclosure, a fuel change-over module for connecting to a fuel injection system of a combustion engine may comprise a heavy fuel input and a light fuel input respectively for receiving heavy fuel and light fuel at different temperatures. The fuel change-over module may further comprise an engine fuel output and an engine fuel input for fluidly connecting to a fuel injection system of the combustion engine. A fuel mixing tank of the fuel change-over module may be fluidly connected to the engine fuel output and the engine fuel input. A fuel change-over device of the fuel change-over module may be fluidly connected between the fuel mixing tank and the heavy fuel input and the light fuel input. The fuel change-over device may be configured to selectively supply heavy fuel received at the heavy fuel input or light fuel received at the light fuel input to the fuel mixing tank. The fuel change-over module may further comprise at least one fuel circulation pump for circulating fuel in a fuel circuit, which is formed when the engine fuel output and the engine fuel input are fluidly connected to the fuel injection system of the combustion engine, and which includes the fuel mixing tank. The volume of the fuel mixing tank may relate to the total volume of the fuel circuit such that, when changing over between the heavy fuel and the light fuel, an initial maximum temperature change rate of the fuel in the fuel circuit may be in the range of 5 °C/min to 20 °C/min under normal operating conditions of the combustion engine.

According to another aspect of the present disclosure, a combustion engine system of a marine vessel may comprise at least one combustion engine and at least one fuel change-over module connected to the at least one combustion engine. The fuel change-over module may comprise a heavy fuel input and a light fuel input respectively for receiving heavy fuel and light fuel at different temperatures. The fuel change-over module may further comprise an engine fuel output and an engine fuel input for fluidly connecting to the fuel injection system of the combustion engine. A fuel mixing tank of the fuel change-over module may be fluidly connected to the engine fuel output and the engine fuel input. A fuel change-over device of the fuel change-over module may be fluidly connected between the fuel mixing tank and the heavy fuel input and the light fuel input. The fuel change-over device may be configured to selectively supply heavy fuel received at the heavy fuel input or light fuel received at the light fuel input to the fuel mixing tank. The fuel change-over module may further comprise at least one fuel circulation pump for circulating fuel in a fuel circuit, which is formed when the engine fuel output and the engine fuel input are fluidly connected to the fuel injection system of the combustion engine, and which includes the fuel mixing tank. The volume of the fuel mixing tank may relate to the total volume of the fuel circuit such that, when changing over between the heavy fuel and the light fuel, an initial maximum temperature change rate of the fuel in the fuel circuit may be in the range of 5 °C/min to 20 °C/min under normal operating conditions of the combustion engine.

According to yet another aspect of the present disclosure, a method of retrofitting a combustion engine system comprising at least one combustion engine and a fuel supply system configured to supply heavy fuel and light fuel to the at least one combustion engine may comprise the step of installing a fuel change-over module between the fuel supply system and the at least one combustion engine. The fuel change-over module may comprise a heavy fuel input and a light fuel input respectively for receiving heavy fuel and light fuel at different temperatures. The fuel change-over module may further comprise an engine fuel output and an engine fuel input for fluidly connecting to the fuel injection system of the combustion engine. A fuel mixing tank of the fuel change-over module may be fluidly connected to the engine fuel output and the engine fuel input. A fuel change-over device of the fuel change-over module may be fluidly connected between the fuel mixing tank and the heavy fuel input and the light fuel input. The fuel change-over device may be configured to selectively supply heavy fuel received at the heavy fuel input or light fuel received at the light fuel input to the fuel mixing tank. The fuel change-over module may further comprise at least one fuel circulation pump for circulating fuel in a fuel circuit, which is formed when the engine fuel output and the engine fuel input are fluidly connected to the fuel injection system of the combustion engine, and which includes the fuel mixing tank. The volume of the fuel mixing tank may relate to the total volume of the fuel circuit such that, when changing over between the heavy fuel and the light fuel, an initial maximum temperature change rate of the fuel in the fuel circuit may be in the range of 5 °C/min to 20 °C/min under normal operating conditions of the combustion engine. The step of installing the fuel change-over module may include reducing the effective volume of a fuel circuit supplying the heavy fuel and the light fuel to the at least one combustion engine.

Other features and aspects of the present disclosure will be apparent from the following description and the accompanying drawings.

### Brief Description of the Drawings

Fig. 1 is a schematic diagram showing an exemplary configuration of a combustion engine system including two combustion engines respectively connected to a fuel change-over module;
Fig. 2 is a schematic diagram showing an exemplary embodiment of a fuel change-over module connected to a combustion engine;
Fig. 3 is a schematic perspective view of a fuel change-over module according to an exemplary embodiment;
Fig. 4 is a graph showing a rate of heavy fuel and light fuel, and the temperature of the fuel mixture during change-over from heavy fuel to light fuel according to an exemplary embodiment; and
Fig. 5 is a graph showing a rate of heavy fuel and light fuel, and the temperature of the fuel mixture during change-over from light fuel to heavy fuel according to an exemplary embodiment.

### Detailed Description

The following is a detailed description of exemplary embodiments of the present disclosure. The exemplary embodiments described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that, when changing over between supplying a first type of fuel and a second type of fuel to a combustion engine, the time for changing over between the fuels may be reduced by installing a separate fuel change-over module in a fuel supply system of the combustion engine. Further, the present disclosure may be based in part on the realization that, if the temperatures of the first fuel and the second fuel are significantly different, the temperature change rate of the fuel in the combustion engine system during change-over may be kept below a predetermined upper limit to reduce wear of the components of the combustion engine system, in particular, injection pumps for supplying pressurized fuel to the cylinders of the combustion engine.

Providing the fuel change-over module having a fuel mixing tank with a predetermined volume may allow completing the change-over between the two types of fuel within a predetermined amount of time while keeping the temperature change rate of the fuel mixture within a predetermined range. Further, by reducing the amount of fuel which has to be replaced during change-over, the cost of changing over from a more expensive type of fuel, for example, marine diesel oil to a less expensive type of fuel, for example, heavy fuel oil may be reduced. Accordingly, when changing over from marine diesel oil to heavy fuel oil, the amount of marine diesel oil that has to be consumed by the combustion engine before the change-over is complete may be reduced. Herein, the term "light fuel" may be used for marine diesel oil, and the term "heavy fuel" may be used for heavy fuel oil. However, it also contemplated that other types of fuel may be the heavy fuel and the light fuel of the present disclosure.

Generally, when changing between fuels having significantly different temperatures, the associated temperature change of the fuel mixture may result in jamming of pump plungers and temperature stress which may affect an injection system of the corresponding combustion engine. Therefore, in some embodiments the (initial) temperature change rate of the fuel may be kept in the range of 5 °C/min to 20 °C/min. For example, when changing from the heavy fuel to the light fuel, the initial maximum temperature change rate may be kept in the range of 5 °C min to 10 °C/min, possibly 7.5 °C/min to 10 °C/min. In another example, the volume of the fuel mixing tank of the fuel change-over module may be selected such that the initial maximum temperature change rate when changing from the light fuel to the heavy fuel is in the range of 10 °C/min to 20 °C/min, possibly 10 °C/min to 15 °C/min.

In some embodiments, the temperature of the fuel mixture circulating through the fuel change-over module may be controlled by selectively cooling the fuel circulating in the fuel change-over module by means of a cooler. Using this cooler may allow increasing the temperature change rate when changing over from the heavy fuel, for example HFO, to the light fuel, for example MDO. The cooler may be controlled by a control unit. For example, the control unit may be configured to start cooling the fuel circulating in the fuel change-over module a predetermined time after initiating the change from the heavy fuel to the light fuel, or at a predetermined temperature of the fuel circulating in the fuel change-over module. By turning on the cooling at an appropriate time, the time for changing over from the heavy fuel to the light fuel may be further reduced.

According to exemplary embodiments, the components of the fuel change-over module may be mounted on a frame of the fuel change-over module. The frame may be configured such that the frame and, accordingly, the fuel change-over module may be conveniently installed in a relatively small space, for example, adjacent to a combustion engine. For example, the frame may have a base area of around 1.5 m² and a height of around of around 2 meters.

In some embodiments, the fuel change-over module may be installed in a combustion engine system which already includes a fuel supply module for supplying heavy fuel and light fuel to one or more combustion engine. Installing the fuel change-over module between the fuel supply module and one or more of the combustion engines may allow reducing the volume of fuel which has to be replaced during change-over. Accordingly, existing combustion engine systems may be retrofitted with the fuel change-over module of the present disclosure to reduce the time for switching over between the heavy fuel and the light fuel. Due to the compact size of the fuel change-over module of the present disclosure, the installation of the same may be performed without having to significantly modify the existing system. This may allow reducing the costs associated with operating corresponding dual fuel combustion engines, for example, onboard marine vessels such as ferries or cargo ships.

By installing one or more fuel change-over modules between the fuel supply module and one or more of the combustion engines, two fuel circuits may be formed, both of which include the fuel mixing tank of the fuel change-over module. Accordingly, the heat of the heavy fuel circulating between the fuel mixing tank of the fuel change-over module and a fuel mixing tank of the fuel supply module may be transferred to the fuel circulating between the fuel mixing tank and the corresponding combustion engine. In this manner, additional heaters for heating the heavy fuel circulating between the fuel mixing tank and the combustion engine may be omitted.

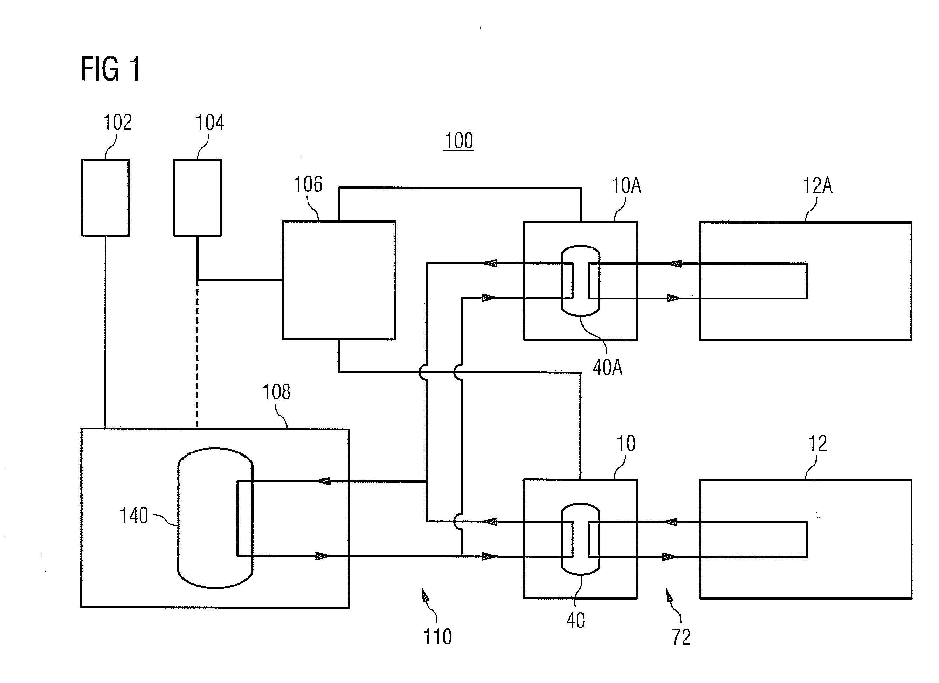

In the following and with reference to Figs. 1 to 5, exemplary embodiments of a fuel change-over module for changing over between a heavy fuel and a light fuel supplied to, for example, one or more combustion engines onboard a ship are disclosed.

As illustrated in Fig. 1, a combustion engine system 100 of a ship may comprise two combustion engines 12 and 12A, each associated with a corresponding one of two fuel change-over modules 10 and 10A. It should be appreciated that, although two combustion engines 12, 12A and two fuel change-over modules 10, 10A are shown, any number of combustion engines and fuel change-over modules may be provided. For example, up to five or six combustion engines may be provided, and not all of the combustion engines may be provided with a fuel change-over module. Combustion engines 12, 12A may, for example, be medium speed combustion engines. However, the present disclosure may also be used with other combustion engines.

Combustion engine system 100 may further comprise a heavy fuel supply module 108, a light fuel supply module 106, a heavy fuel tank 102, and a light fuel tank 104.

Heavy fuel tank 102 may store heavy fuel such as HFO and may be configured to supply the heavy fuel to heavy fuel supply module 108.

Light fuel tank 104 may store light fuel such as MDO and may be configured to supply the light fuel to light fuel supply module 106. Further, light fuel tank 104 may be configured to supply the light fuel to the heavy fuel supply module 108, as shown by the dashed line in Fig. 1. This may be the case when combustion engine system 100 has been retrofitted with fuel change-over modules 10, 10A and light fuel supply module 106. In such a system, the heavy fuel and the light fuel may previously have been supplied to combustion engines 12, 12A via heavy fuel supply module 108 only, which also may have been used to change-over between the two types of fuels.

Heavy fuel supply module 108 may include a heavy fuel mixing tank 140. Heavy fuel mixing tank 140 may be configured to store the heavy fuel received from heavy fuel tank 102. Heavy fuel supply module 108 may further be configured to supply heavy fuel from heavy fuel mixing tank 140 to each fuel change-over module 10, 10A, and receive heavy fuel from each fuel change-over module 10, 10A.

Light fuel supply module 106 may be configured to supply light fuel from light fuel tank 104 to each fuel change-over module 10, 10A, for example, using one or more fuel pumps (not shown).

Fuel change-over modules 10, 10A each may include a fuel mixing tank 40, 40A and may be configured to receive a supply of heavy fuel and light fuel from heavy fuel supply module 108 and light fuel supply module 106, respectively, and to return heavy fuel to heavy fuel supply module 108. Fuel change-over modules 10, 10A may have the same configuration, and in the following only the configuration of fuel change-over module 10 is described in further detail. Fuel change-over module 10 may be configured to supply fuel from fuel mixing tank 40 to combustion engine 12, and to receive unspent fuel from combustion engine 12, thereby forming a first fuel circuit 72 between fuel change-over module 10 and combustion engine 12.

Fuel mixing tank 40 may be fluidly connectable to heavy fuel mixing tank 140 of heavy fuel supply module 108, thereby forming a second fuel circuit 110 between heavy fuel mixing tank 140 and fuel mixing tank 40. The volume of fuel mixing tank 40 may be considerably smaller than the volume of heavy fuel mixing tank 140. For example, the volume of fuel mixing tank 40 may be less than one third or one half of the volume of heavy fuel mixing tank 140. Accordingly, the volume of first fuel circuit 72 may be much smaller than the volume of a corresponding fuel circuit which may be formed between heavy fuel mixing tank 140 and combustion engines 12, 12A in case fuel supply modules 10, 10A are not provided. Accordingly, the volume of fuel that has to be supplied during changing over between the fuel types may be considerably reduced when fuel change-over modules 10, 10A are provided, especially considering the reduced length of the fuel pipes connecting each of fuel change-over modules 10, 10A to the corresponding combustion engine. Accordingly, the time needed for changing over may be considerably reduced.

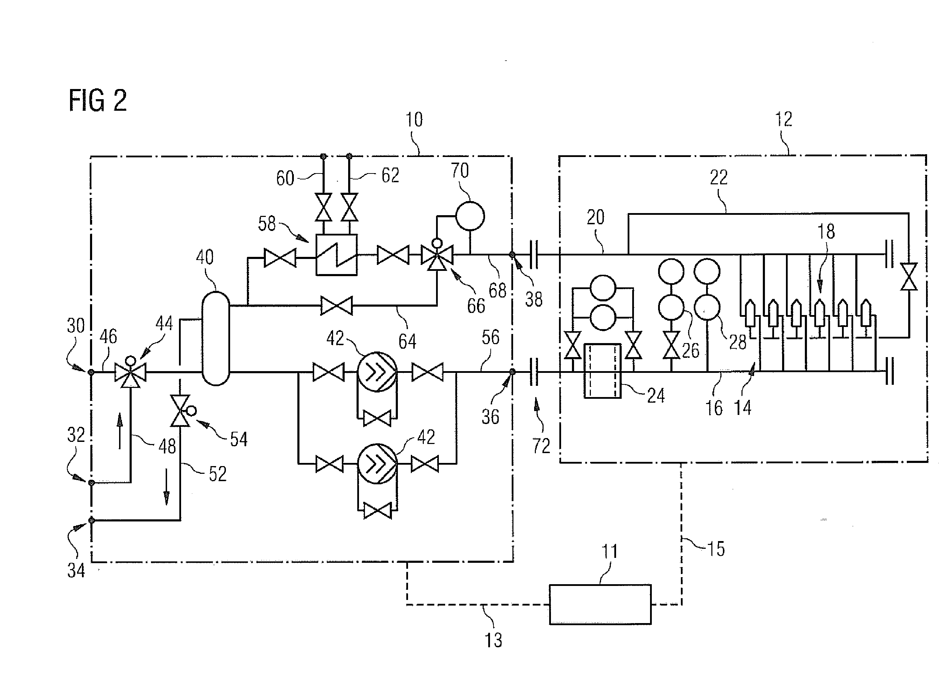

Fig. 2 shows an exemplary configuration of fuel change-over module 10 of Fig. 1 connected to combustion engine 12. Combustion engine 12 may include a plurality of cylinders and a plurality of piston assemblies disposed within the cylinders (not shown). Combustion engine 12 may include any number of cylinders, and the cylinders may be disposed in an "in-line" configuration, a "V-configuration", or any other conventional configuration. Combustion engine 12 may include an injection system 14 for injecting the heavy fuel and/or the light fuel into the respective combustion chambers of the cylinders of the combustion engine. Injection system 14 may include a fuel supply line 16, a plurality of injection pumps 18, a fuel return line 20, a fuel bypass line 22, and a filter 24.

Fuel supply line 16 may be configured to receive a supply of fuel from fuel change-over module 10. Fuel supply line 16 may supply the fuel to injection pumps 18 for pressurizing and injecting the same into the combustion chambers of the cylinders of the combustion engine. In another exemplary embodiment, instead of injection pumps 18, a common rail and an associated high-pressure pump may be used to supply high-pressure fuel to the combustion chambers via corresponding injectors.

Filter 24 may be installed in fuel supply line 16 upstream of injection pumps 18 to filter contaminants from the fuel supplied to injection pumps 18. Sensors such as a pressure sensor 26 and a temperature sensor 28 may be connected to fuel supply line 16 upstream of injection pumps 18 to monitor the pressure and temperature, respectively, of the fuel supplied to injection pumps 18.

Injection pumps 18 may be configured to provide pressurized fuel for injection into the combustion chambers of combustion engine 12. Injector pumps 18 may be connected to fuel return line 20 via fuel bypass line 22 in order to return unspent fuel to fuel change-over module 10 via fuel return line 20.

Fuel change-over module 10 may comprise a light fuel input 30, a heavy fuel input 32, a fuel return output 34, an engine fuel output 36, and an engine fuel input 38.

Light fuel input 30 may be configured to receive light fuel from light fuel supply module 106 (see Fig. 1). Heavy fuel input 32 may be configured to receive heavy fuel from heavy fuel supply module 108 (see Fig. 1). Light fuel input 30 and heavy fuel input 32 may be connected to the corresponding fuel supply modules via fuel pipes (not shown). Fuel return output 34 may be configured to return heavy fuel from fuel change-over module 10 to heavy fuel supply module 108 (see Fig. 1).

Engine fuel output 36 may be configured to be connected to fuel supply line 16 of combustion engine 12, and engine fuel input 38 may be configured to be connected to fuel return line 20 of combustion engine 12.

Fuel change-over module 10 may further comprise a fuel mixing tank 40, fuel circulation pumps 42, and a fuel change-over valve 44 such as, for example, a three-way valve.

Fuel change-over valve 44 may be fluidly connected to light fuel input 30 and heavy fuel input 22 via fuel lines 46 and 48, respectively. Further, fuel change-over device 44 may be fluidly connected to fuel mixing tank 40 via a fuel line 50.

Mixing tank 40 may be fluidly connected to fuel return output 34 via a fuel line 52. A two-way valve 54 may be fluidly connected between fuel mixing tank 40 and fuel return output 34 and may be configured to selectively allow or block passage of a return flow of fuel from fuel mixing tank 40 to fuel return output 34.

Fuel circulation pumps 42 may be fluidly connected between fuel mixing tank 40 and engine fuel output 36. It should be noted that, while two fuel circulation pumps 42 disposed in parallel are shown in Fig. 2, in other embodiments, several or only a single fuel circulation pump 42 may be provided. However, in order to ensure the reliable operation of fuel change-over module 10, a backup fuel circulation pump 42 may be provided to be operated upon failure of one of fuel circulation pumps 42. Fuel circulation pumps 42 may be fluidly connected to engine fuel output 36 via fuel line 56 and may be configured to circulate fuel through fuel change-over module 10, i.e. between fuel change-over module 10 (in particular, fuel mixing tank 40) and combustion engine 12.

Fuel change-over module 10 may optionally comprise a cooler 58. Cooler 58 may be configured to reduce the temperature of light fuel, which may have been heated by injection pumps 18. In case a common rail injection system is used, in some embodiments, cooler 58 may be omitted. Cooler 58 may be connected between fuel mixing tank 40 and engine fuel input 38 and may be configured to selectively cool the fuel received from combustion engine 12 at engine fuel input 38. Cooler 58 may be connected to a cooling circuit (not shown) via coolant lines 60 and 62. Cooler 58 may be bypassed via a bypass line 64 to directly pass fuel returned from combustion engine 12 to fuel mixing tank 40 by a corresponding operation of a three-way valve 66 provided upstream of cooler 58. Three-way valve 66 may be connected to engine fuel input 38 and cooler 58 via a fuel line 68. A temperature sensor 70 may be disposed along fuel line 68 to detect the temperature of the fuel received at engine fuel input 38 and effect a corresponding actuation of three-way valve 66 in response to the detected temperature, as will be described below.

As shown in Figs. 1 and 2, upon connecting fuel change-over module 10 to combustion engine 12, fuel circuit 72 comprising fuel mixing tank 40, one of fuel circulation pumps 42, fuel line 56, fuel supply line 16, fuel bypass line 22, fuel return line 20, fuel line 68, and optionally cooler 58 may be formed. Fuel circuit 72 may have a total volume which mainly depends on the dimensions and lengths of the various fuel lines and the volume of fuel mixing tank 40.

Fuel change-over module 10 and combustion engine 12 may be controlled by a control unit 11. Control unit 11 may be connected to fuel change-over module 10 and combustion engine 12 via communication lines 13 and 15, respectively. Control unit 11 may be configured to control operation of fuel change-over module 10 in response to operator inputs. Alternatively and/or additionally, fuel change-over module 10 may be manually operated by operating personal. Furthermore, control unit 11 may be configured to control operation of combustion engine 12 based on a required output in a known manner. Control unit 11 may be configured to receive inputs from a plurality of sensors, for example, sensors 26, 28 of combustion engine 12 and sensor 70 of fuel change-over module 10. Control unit 11 may be configured to, for example, control operation of three-way valve 66 in order to either bypass cooler 58 or pass the fuel circulating in fuel circuit 72 through cooler 58 to further reduce the temperature of the fuel. It should be appreciated that, while a single control unit 11 is shown, more than one control unit may be provided to control fuel change-over module 10 and combustion engine 12 independent from each other.

Control unit 11 may be a single microprocessor or plural microprocessors, and may also be a general engine control unit (ECU) capable of controlling numeral functions associated with combustion engine 12 and/or its associated components. Control unit 11 may include all the components required to run an application such as, for example, a memory, a secondary storage device, and a processor such as a central processing unit or any other means known in the art for controlling combustion engine 12 and its various components. Various other known circuits may be associated with control unit 11, including power supply circuitry, signal-condition circuitry, communication circuitry, and other appropriate circuitry. Control unit 11 may analyze and compare received and stored data, and, based on instructions and data stored in memory or input by a user, determine whether action is required. For example, control unit 11 may compare received values with target values stored in memory, and, based on the results of the comparison, may transmit signals to one or more components to alter the operation status thereof.

Control unit 11 may include any memory device known in the art for storing data relating to the operation of combustion engine 12 and/or fuel change-over module 10. The data may be stored in form of one or more maps that describe and/or relate, for example, operation of valve 66 to the fuel temperature measured by a sensor 70. Each of the maps may be in form of tables, graphs, and/or equations, and may include a compilation of data collected from lab and/or field operation of combustion engine 12 and/or fuel change-over module 10. The maps may be generated by performing instrumented tests under various operating conditions while varying parameters associated therewith. Controller 11 may reference these maps and control operation of one component in response to the desired operation of another component.

During operation of combustion engine 12, fuel change-over valve 44, for example, three-way valve 44 may be operated such that either light fuel or heavy fuel is supplied to fuel mixing tank 40. As the fuel circulating in fuel circuit 72 is consumed by combustion engine 12, more fuel is supplied to fuel mixing tank 40 via three-way valve 44. Accordingly, during stationary operating conditions of combustion engine 12, when no change-over between the different types of fuels is performed, a first type of fuel circulates in fuel circuit 72.

When it becomes necessary to change-over between the two types of fuel, three-way valve 44 is actuated to block passage of the first type of fuel circulating in fuel circuit 72, and to allow passage of the second type of fuel. Accordingly, the second type of fuel is supplied to fuel mixing tank 40. As the fuel in fuel circuit 72 is consumed by combustion engine 12, the rate of the second type of fuel, which is supplied to fuel mixing tank 40, may continuously increase, until, after a certain amount of time, the switching may considered to be completed and the first type of fuel in fuel circuit 72 has essentially been replaced by the second type of fuel.

Accordingly, when combustion engine 12 is operated during predetermined load conditions during changing over, for example, under normal load conditions, the fuel consumption rate of combustion engine 12 may have a predetermined value, and the amount of time needed until the change-over is complete may depend on the total volume of fuel circuit 72. Therefore, the change-over time may be controlled by providing a fuel mixing tank 40, which may have a specified volume, resulting in the desired time for completing the change-over, while at the same time resulting in a temperature change rate that may not cause in undesired thermal stress for the components of combustion engine 12 and fuel change-over module 10. This will be explained in more detail below.

Generally, in case a light fuel such as marine diesel oil and a heavy fuel such as heavy fuel oil are used, the temperatures of the respective fuels may vary significantly. For example, the heavy fuel oil typically may be required to have a temperature of between 140 °C and 150 °C, whereas the marine diesel oil may typically have ambient temperature, for example, between 20 °C and 40 °C. Accordingly, during changing over between heavy fuel oil and marine diesel oil, the temperature of the fuel circulating through fuel circuit 72 may change between these two values. It may be disadvantageous if the temperature of the fuel changes too quickly, because components such as fuel circulation pumps 42, injection pumps 18 and the corresponding injectors may be subjected to wear. To limit the temperature change, the volume of fuel mixing tank 40 may be selected such that the change-over time does not become too short, and the temperature change rate of the fuel does not become too large. For example, it may be desirable to achieve a maximum temperature decrease of 10 °C/min while changing over from the heavy fuel oil to the marine diesel oil to avoid jamming of the plungers of circulation pumps 42 and injection pumps 18. When changing over from the marine diesel oil to the heavy fuel oil, a maximum temperature increase of up to, for example, 15 °C/min may be acceptable, because the plungers of the corresponding pumps may heat up slower than the corresponding cylinders and jamming may be avoided. With the disclosed fuel change-over module 10, the desired temperature change rates and change-over times may be achieved by adapting the size of fuel mixing tank 40, depending on the location in which fuel change-over module 10 is installed.

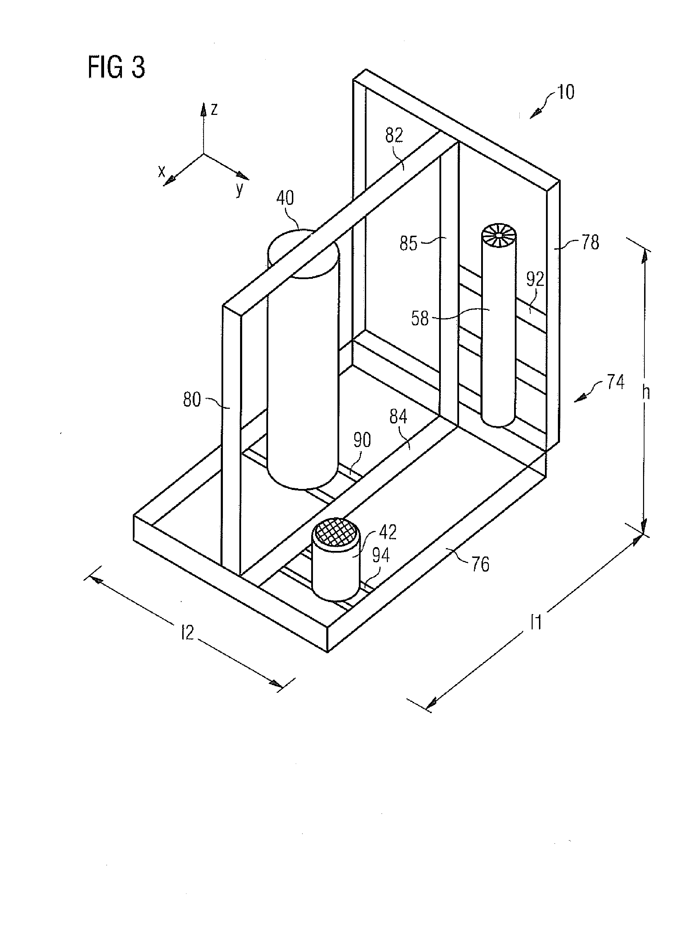

Referring to Fig. 3, an exemplary configuration of a compact embodiment of fuel change-over module 10 for installation next to a combustion engine 12 is shown. It should be appreciated, however, that other arrangements of the components of fuel change-over module 10 are also possible. For example, in some embodiments, the components of fuel change-over module 10 may be installed on different support structures in a corresponding machine room and may not be provided as a unit. Fuel change-over module 10 may comprise a frame 74 for mounting the various components of fuel change-over module 10, for example, fuel mixing tank 40, circulation pumps 42, and cooler 58, in a compact manner. Frame 74 may comprise a rectangular base 76, a rectangular side frame 78 vertically extending from one end of rectangular base 76, and a vertical support beam 80 vertically extending from the opposite end of base 76. The upper end of vertical support beam 80 may be connected to side frame 78 via a horizontal support beam 82. Various other support beams, for example, central support beams 84 and 85 respectively extending between opposite sides of base 76 and side frame 78, and pairs of support beams 90, 92, 94 respectively extending from central support beams 84, 85 to the sides of base 76 and side frame 78 may be provided.

As shown in Fig. 3, frame 74 may have a first length 11 in a first direction X, and a second length 12 in a second direction Y perpendicular to the first direction X. For example, length 11 may be around 160 cm, and length 12 may be around 110 cm. Further, frame 74 may have a height h in a height direction Z perpendicular to first direction X and second direction Y. For example, height h may be around 200 cm.

As shown in Fig. 3, the components of fuel change-over module 10 may be mounted on rectangular base 76 and rectangular side frame 78, as well as on beams 80, 82, 84, 85, 90, 92, 94 in a known manner. In the example shown in Fig. 3, fuel mixing tank 40, which is substantially formed as a cylinder, is disposed in an upright position in the back portion of fuel change-over module 10. Various control instruments and levers and the like (not shown) may advantageously be disposed in the front portion of fuel change-over module 10 to be easily accessible from a space in front of frame 74.

With the compact arrangement of the components of fuel change-over module 10 on frame 74 as shown in Fig. 3, fuel change-over module 10 as a whole may be conveniently installed in a limited space adjacent to combustion engine 12. In particular, in systems which already include a fuel supply module for supplying heavy fuel and light fuel to combustion engine 12, fuel change-over module 10 may be installed between the already existing fuel supply module and combustion engine 12. In this matter, existing combustion engine systems may be retrofitted with fuel change-over module 10 to decrease the time necessary for changing over between the heavy fuel and the light fuel by reducing the volume of fuel which has to be replaced during the change-over.

For example, an existing combustion engine system may comprise a fuel change-over module such as heavy fuel supply module 108 shown in Fig. 1. Heavy fuel mixing tank 140 of heavy fuel supply module 108 may have a comparatively large volume, whereas fuel mixing tank 40 of fuel change-over module 10 may have a comparatively smaller volume. For example, heavy fuel mixing tank 140 may have a volume of 150 liters, whereas fuel mixing tank 40 may have a volume of only 50 liters. Generally, the volume of heavy fuel mixing tank 140 may be at least two times the volume of fuel mixing tank 40 of fuel change-over module 10. It should be noted, however, that the volume of fuel mixing tank 40 of fuel change-over module 10 and also the volume of heavy fuel mixing tank 140 depend on the type of combustion engine 12. Generally, the larger the combustion engine(s) 12, the larger fuel mixing tank 40 of fuel change-over module 10 should be to achieve the desired fuel change-over times and temperature change rates. In some embodiments, fuel mixing tank 40 may have a volume of between 30-70 liters, which may result in a total volume of fuel circuit 72 of between 100-125 liters.

### Industrial Applicability

The disclosed fuel change-over module 10 for a combustion engine 12 may reduce the change-over time required for switching from one type of fuel to another. At the same time, fuel change-over module 10 may allow controlling the temperature change rate of the fuel during the change-over.

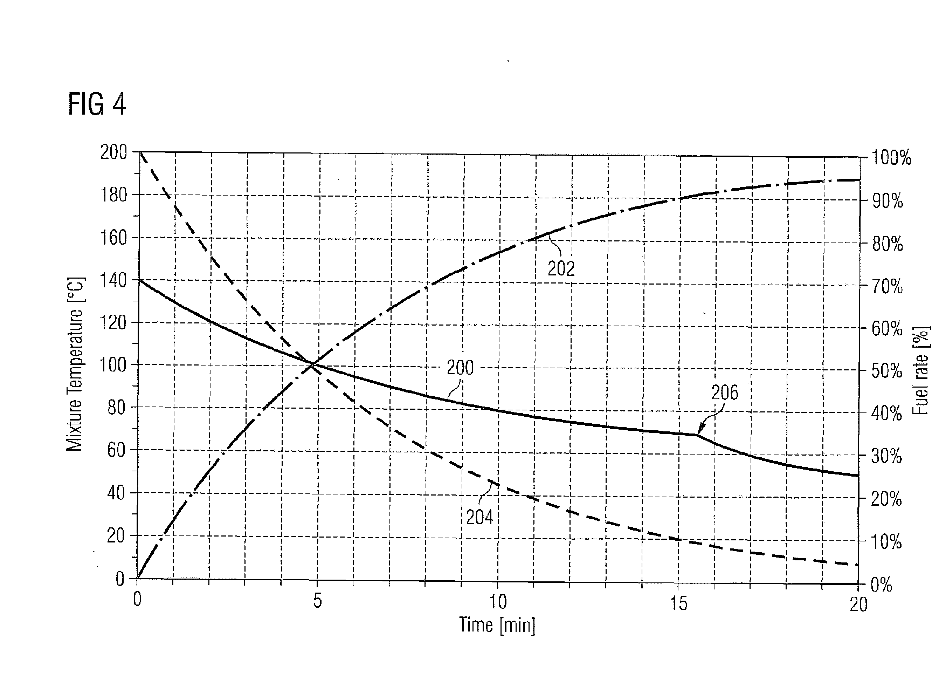

Fig. 4 shows an example of the change-over from heavy fuel oil as the first type of fuel to marine diesel oil as the second type of fuel. The horizontal axis of Fig. 4 shows the time in min, and the vertical axis of Fig. 4 shows the temperature of the fuel mixture in fuel circuit 72 (solid line 200), the rate or portion of marine diesel oil MDO (dot-dashed line 202), and the rate or portion of heavy fuel oil HFO (dashed line 204), respectively.

As shown in Fig. 4, at time 0, fuel change-over device 44 may be operated to stop supplying heavy fuel oil, and start supplying marine diesel oil to fuel mixing tank 40 of fuel change-over module 10. It should be noted that, prior to actuating fuel change-over device 44 in this manner, two-way valve 54 may be actuated to stop circulation of the heavy fuel through fuel circuit 110 (see Fig. 1). In some embodiments, control unit 11 may be configured to automatically actuate three-way valve 44 in response to actuation of two-way valve 54.

As described above, the temperature of the heavy fuel oil may be around 150 °C, and the temperature of the marine diesel oil may be around 40 °C. Accordingly, upon actuation of three-way valve 44, the two types of fuel may mix in fuel circuit 72, and the temperature 200 of the fuel mixture may decrease. The temperature change rate may depend on the amount of fuel in fuel circuit 72 and the amount of fuel consumed by combustion engine 12. Fuel mixing tank 40 may be configured depending on these two variables, for example, such that the maximum initial temperature change rate of the fuel in fuel circuit 72 may be approximately 10 °C/min, as shown in Fig. 4. It should be noted that cooler 58 of fuel change-over module 10 may be bypassed during the initial stage of this change-over.

As more and more marine diesel oil is supplied to fuel mixing tank 40, and more and more of the remaining heavy fuel oil is consumed, the temperature change rate may decrease. In the same manner, the rate 204 of heavy fuel oil may decrease, while the rate 202 of marine diesel oil may increase.

After a certain threshold temperature (indicated by an arrow 206), for example, around 70 °C, has been reached, and the temperature change rate has leveled off, valve 66 may be actuated to pass the fuel mixture through cooler 58 to again increase the temperature change rate of the fuel in fuel circuit 72. For example, valve 66 may be actuated by control unit 11 in response to the detection result of temperature sensor 70. In this matter, fuel temperatures which are normally used during operation with marine diesel oil, for example, around 50 °C, may be reached. As shown in Fig. 4, the change-over may be considered to be complete after approximately 15 minutes, when the rate 204 of heavy fuel oil in fuel circuit 72 is around 10 %.

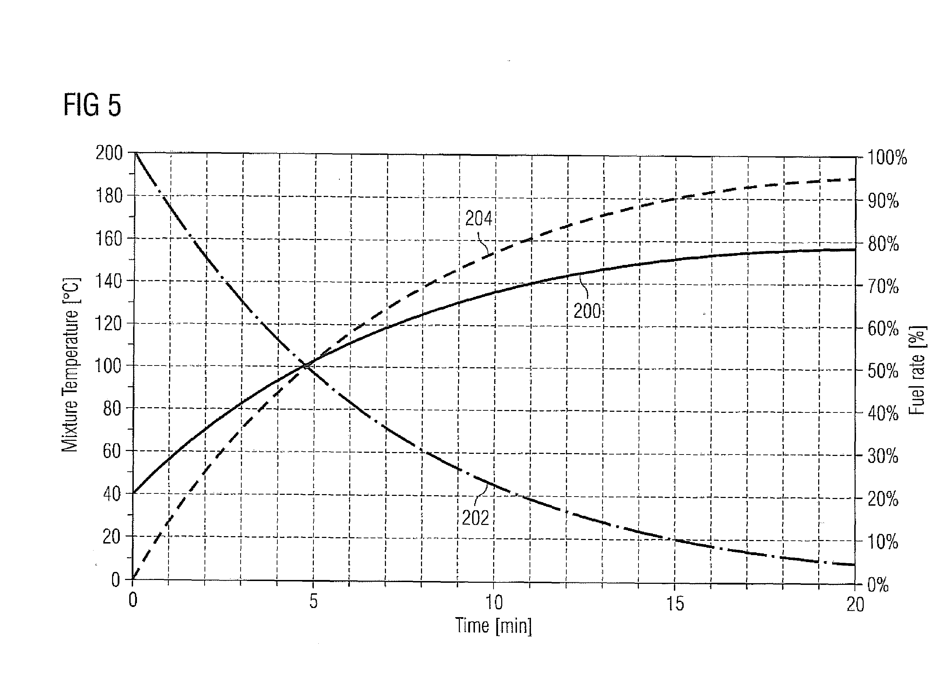

Fig. 5 shows a graph corresponding to Fig. 4 and showing the change-over from marine diesel oil to heavy fuel oil. The change-over from heavy fuel oil to marine diesel oil is initiated by first actuating three-way valve 44 to stop supplying marine diesel oil and start supplying heavy fuel oil. Then, cooler 58, which generally cools the marine diesel oil during stationary operation of combustion engine 12 with the same, is deactivated or bypassed. After deactivation of cooler 58, for example, a predetermined time after deactivation of the cooler or after a predetermined temperature has been reached, two-way valve 54 may be actuated to again begin circulating fuel through fuel circuit 110 (see Fig. 1). As shown in Fig. 5, the initial temperature change rate of the fuel oil mixture may be, for example, about 15 °C/min, which is higher than the initial maximum temperature change rate during change-over from heavy fuel oil to marine diesel oil. As in Fig. 4, the change-over from marine diesel oil to heavy fuel oil may be considered to be complete after around 15 minutes, when the rate 202 of marine diesel oil has reached a value of around 10 %.

While the present disclosure has been described in detail with respect to a single fuel change-over module 10 for a single combustion engine 12, it is also contemplated that combustion engine system 100 may comprise a plurality of combustion engines 12, each being associated with a corresponding fuel change-over module 10, as shown in Fig. 1. In other embodiments, only some of combustion engines 12 may be provided with fuel change-over module 10. Further, in combustion engine systems having two or more combustion engines, with the configuration shown in Fig. 1, it is possible to, for example, operate one or more of combustion engines 12 with a first type of fuel, for example, heavy fuel oil, and operate one or more of combustion engines 12 with a second type of fuel, for example, marine diesel oil. This is possible due to the provision of separate light fuel supply module 106 together with fuel change-over module(s) 10. Accordingly, it may possible to continue operating one or more of combustion engines 12 with the relatively cheap heavy fuel oil, and only operate some of combustion engines 12 with the relatively expensive marine diesel oil.

Although the preferred embodiments of this invention have been described herein, improvements and modifications may be incorporated without departing from the scope of the following claims.

## Claims

1. A fuel change-over module (10) for a combustion engine (12), the fuel change-over module comprising:
a light fuel input (30) for receiving light fuel from a light fuel supply module (106);
a heavy fuel input (32) for receiving heavy fuel from a heavy fuel supply module (108);
a fuel mixing tank (40) for receiving the fuel received at the light fuel input (30) and the heavy fuel input (32);
a fuel change-over valve (44) fluidly connected to the light fuel input (30), the heavy fuel input (32), and the fuel mixing tank (40) and configured to selectively supply fuel received at the light fuel input (30) or fuel received at the heavy fuel input (32) to the fuel mixing tank (40);
an engine fuel output (36) for supplying fuel from the fuel mixing tank (40) to the combustion engine (10); and
an engine fuel input (38) for receiving unspent fuel from the combustion engine (10) and supplying the unspent fuel to the fuel mixing tank (40).

2. The fuel change-over module of claim 1, further comprising:
a fuel return output (34) for returning fuel from the fuel change-over module (10) to the heavy fuel supply module (108) of the combustion engine (10); and
a fuel return valve (54) fluidly connected to the fuel return output (34) and the fuel mixing tank (40) and configured to selectively pass or block a return flow of fuel from the fuel mixing tank (40) to the fuel return output (34).

3. The fuel change-over module of claim 1 or claim 2, further comprising:
at least one fuel circulation pump (42) for circulating fuel through the fuel change-over module (10); and/or
a cooler (58) configured to cool the fuel circulating through the fuel change-over module (10).

4. The fuel change-over module of claim 3, further comprising a fuel bypass line (64) configured to allow the fuel circulating through the fuel change-over module (10) to bypass the cooler (58), and a fuel bypass valve (66) configured to selectively pass the fuel through the cooler (58) or the fuel bypass line (64).

5. The fuel change-over module of claim 4, further comprising a temperature sensor (70) configured to measure the temperature of the fuel circulating through the fuel change-over module (10), and a control unit (11) configured to actuate the fuel bypass valve (66) to pass the fuel through the cooler (58) when the temperature measured by the temperature sensor (70) reaches a predetermined temperature threshold value when changing over from the heavy fuel to the light fuel.

6. The fuel change-over module of any one of the preceding claims, further comprising a frame (74) for mounting the components of the fuel change-over module (10), the frame (74) including a base (76) having a first length (11) in a first direction (X) and a second length (12) in a second direction (Y) perpendicular to the first direction (X), and a support structure (78, 80, 82, 86) mounted on the base (76) and having a height (h) in the direction perpendicular to the first direction (X) and the second direction (Y), wherein the first length (11) is between around 1500 cm and 2000 cm, and the second length (12) is between around 1000 cm and 1500 cm, and the height (h) is between around 1800 cm and 2300 cm.

7. The fuel change-over module of any of the preceding claims, wherein the fuel mixing tank (40) has a volume of between around 30 1 and around 70 1.

8. A combustion engine system (100) for a ship, comprising:
at least one combustion engine (12);
at least one fuel change-over module (10) of any one of claims 1 to 7 fluidly connected to the at least one combustion engine (12);
a heavy fuel supply module (108) configured to supply heavy fuel from a heavy fuel tank (102) to the at least one fuel change-over module (10); and
a light fuel supply module (106) configured to supply light fuel from a light fuel tank (104) to the at least one fuel change-over module (10).

9. The combustion engine system of claim 8, wherein the heavy fuel supply module (108) includes a heavy fuel mixing tank (140) having a volume that is at least two times the volume of the fuel mixing tank (40) of the at least one fuel change-over module (10).

10. The combustion engine system of claim 8 or claim 9, wherein the heavy fuel is supplied to the fuel change-over module (10) at a temperature of between about 140 °C and about 150 °C and the light fuel is supplied to the fuel change-over module (10) at a temperature of between about 20 °C and about 40 °C, and the volume of the fuel mixing tank (40) is selected such that an initial temperature change rate of the fuel circulating between the fuel change-over module (10) and the at least one combustion engine (10) when changing over from the heavy fuel to the light fuel is in the range of 5 °C/min to 10 °C/min, possibly 7.5 °C/min to 10 °C/min, and/or the initial temperature change rate of the fuel circulating between the fuel change-over module (10) and the at least one combustion engine (10) when changing over from the light fuel to the heavy fuel is in the range of 10 °C/min to 20 °C/min, possibly 10 °C/min to 15 °C/min.

11. A method of retrofitting a fuel change-over module (10) to a combustion engine system (100), the combustion engine system comprising at least one combustion engine (12) and a supply module (108) configured to supply heavy fuel and/or light fuel from a heavy fuel tank (102) and a light fuel tank (104), respectively, to the at least one combustion engine (12), the method comprising:
installing the fuel change-over module (10) of any one of claims 1 to 7 between the fuel supply module (108) and the at least one combustion engine (12), thereby reducing the effective volume of fuel in the combustion engine system that has to be replaced during changing over between the heavy fuel and the light fuel.

12. The method of claim 11, further comprising installing a light fuel supply module (106) configured to directly supply light fuel from the light fuel tank (104) to the fuel change-over module (10).

13. A method of operating a combustion engine (12), the method comprising:
circulating, when the combustion engine (12) is operating on a heavy fuel, the heavy fuel in a first fuel circuit (72) including a fuel mixing tank (40) and the combustion engine (12); and
circulating the heavy fuel in a second fuel circuit (110) including the fuel mixing tank (40) and a heavy fuel mixing tank (140), thereby replenishing the heavy fuel consumed by the combustion engine (12) via the fuel mixing tank (40).

14. The method of claim 13, further comprising:
stopping, when changing over from operating the combustion engine (12) on the heavy fuel to operating the combustion engine (12) on a light fuel, circulation of the heavy fuel through the second fuel circuit (110); and
supplying the light fuel to the fuel mixing tank (40) in response to the step of stopping circulation of the heavy fuel through the second fuel circuit (110), thereby replacing the heavy fuel in the first fuel circuit (72) by the light fuel.

15. The method of claim 14, further comprising:
stopping, when changing over from operating the combustion engine (12) on the light fuel to operating the combustion engine (12) on the heavy fuel, the supply of light fuel to the fuel mixing tank (40);
supplying the heavy fuel to the fuel mixing tank (40) in response to the step of stopping the supply of light fuel to the combustion engine (12), thereby replacing the light fuel in the first fuel circuit (72) by the heavy fuel; and
resuming circulation of the heavy fuel through the second fuel circuit (110) either a predetermined time after starting to supply the heavy fuel to the fuel mixing tank (40), or when the mixture of heavy fuel and light fuel circulating through the first fuel circuit (72) has reached a predetermined temperature.
